# EUROPÄISCHE PATENTANMELDUNG

(11) **EP 3 228 415 A1**
(43) Veröffentlichungstag der Anmeldung: **11.10.2017**
(21) Anmeldenummer: 16164438.0
(22) Anmeldetag: 08.04.2016
(51) Int. Cl.: B23K 15/08, B22F 3/105, B23K 26/34, B23K 26/362, B29C 67/00, B23K 15/00, B23K 26/60, B23K 101/00, B23K 103/10, B23K 103/12, B23K 103/18

(54) **VERFAHREN ZUR HERSTELLUNG EINES WERKSTÜCKS DURCH BESCHICHTEN UND ADDITIVES HERSTELLEN; ENTSPRECHENDES WERKSTÜCK**

(71) Anmelder: Siemens Aktiengesellschaft, 80333 München (DE)
(72) Erfinder: Brunhuber, Christian, 91275 Auerbach (DE); Graichen, Andreas, 60214 Norrköping (SE); Hanebuth, Henning, 85652 Pliening OT Gelting (DE); Schneider, Heinz-Ingo, 85598 Baldham (DE)

(57) **Zusammenfassung**

Die Erfindung betrifft ein Verfahren zur Herstellung eines Werkstücks (5, 9), umfassend das Bereitstellen eines Substrats (1) mit einer vorbestimmten Oberflächenstruktur (2), das Beschichten der Oberflächenstruktur (2) mit einem Beschichtungsmaterial (9), wobei das Beschichtungsmaterial (9) für eine Herstellungstemperatur eines additiven Herstellungsverfahrens beständig ist, das additive Herstellen eines Materials (5) für das Werkstück (5, 9) auf der beschichteten Oberflächenstruktur (2) mit dem additiven Herstellungsverfahren, so dass die beschichtete Oberflächenstruktur (2) eine Grundfläche (3) des herzustellenden Werkstücks (5, 9) definiert und das Ablösen des Substrats (1) . Weiterhin ist ein Werkstück (5, 9) beschrieben, welches mittels des beschriebenen Verfahrens hergestellt oder herstellbar ist.

## Beschreibung

Die vorliegende Erfindung betrifft ein Verfahren zur Herstellung eines Werkstücks, beispielsweise eines hochtemperaturbeständigen Werkstücks, wie einem Werkstück oder Bauteil, welches im Heißgaspfad einer Strömungsmaschine, beispielsweise einer Gasturbine, eingesetzt wird. Weiterhin betrifft die vorliegende Erfindung ein Werkstück, welches mit dem genannten Verfahren hergestellt wurde oder herstellbar ist.

Additive oder generative Herstellungsverfahren (englisch "rapid prototyping") zur Herstellung von dreidimensionalen (3D-) Strukturen, wie beispielsweise selektivem Laserschmelzen (SLM englisch für "selective laser melting") und Auftragschweißen, beispielsweise Laserauftragschweißen (im Englischen "laser cladding", oder LMD für "laser metal deposition") werden beispielsweise bei der Herstellung als auch bei der Reparatur von heißgasbeaufschlagten oder hochtemperaturbelasteten Teilen von Gasturbinen eingesetzt.

Das SLM-Verfahren erlaubt den additiven Aufbau komplexer Formkörper oder Werkstücke mit relativ feiner Innenstruktur, beispielsweise mit Feinheiten oder Strukturgrößen zwischen 80 µm und 100 µm oder weniger. Das SLM-Verfahren gehört zu den Pulverbettverfahren, wobei eine Verkleinerung der Strukturgrößen oder Verbesserung der Oberflächenrauheit in erster Linie durch eine Verkleinerung der Pulverfraktionen bis herab zu einer mittleren Pulverkorngröße von ca. 20 bis 40 µm erreicht werden kann. Noch kleinere Pulverkörner sind in der Regel nicht mehr förderbar und/oder anwendbar. Eine erreichbare Oberflächenrauheit von mittels SLM-Verfahren hergestellten Oberflächen liegt etwa zwischen 60 µm und 100 µm. Das SLM-Verfahren erlaubt weiterhin Aufbauraten oder Abscheidungsraten von 3 bis 8 cm³/h.

Beim SLM-Verfahren ist der Aufbau einer Struktur entlang lediglich einer bestimmten (Aufbau-) Achse definiert. Deshalb muss beim Aufbau von innenliegenden oder hohlen Strukturen auf Stützstrukturen zurückgegriffen werden, welche beispielsweise überhängende Abschnitte der Strukturen während der Herstellung abstützen und gegebenenfalls eine entsprechende Wärmeabfuhr ermöglichen. Diese Stützstrukturen benötigen jedoch unnötiges Abscheidungsmaterial und müssen überdies nachträglich noch aufwendig von der eigentlich gewünschten Struktur getrennt und/oder entsprechend nachbearbeitet werden. Die Stützstrukturen werden üblicherweise so gewählt und angeordnet, dass besonders unerwünschte Artefakte, welche durch die additive Herstellung hervorgerufen werden, vermieden werden. Als weiterer Nachteil beim SLM-Verfahren kann eine nachträgliche Befreiung von überflüssigem, insbesondere pulverförmigem, Ausgangsmaterial nur schwer aus filigranen Räumen des Bauteils entfernt werden.

Im Gegensatz zum SLM-Verfahren kann beim LMD-Prozess der additive Aufbau entlang von mindestens drei Achsen (beispielsweise drei zueinander senkrechten Raumrichtungen) erfolgen. Beim LMD-Verfahren können alternativ fünf- bzw. achtachsige Vorrichtungen zum Einsatz kommen, bei denen beispielsweise eine Basis oder Unterlage für das aufzubauende Material als auch ein Abscheidungs- oder Herstellungskopf oder die entsprechende Pulverdüse bzw. Laservorrichtung in drei aufeinander senkrechten Raumrichtungen beweglich sind. Für eine achtachsige Vorrichtung, also mit acht geometrischen Freiheitsgraden, kann die Unterlage zusätzlich um zwei verschiedene Achsen (Rotations- und/oder Kippachsen) beweglich sein.

Das LMD-Verfahren ist für gewöhnlich ein CAD- ("computer aided design") und/oder roboterunterstütztes Verfahren, wobei 3D-Strukturen quasi isotrop aufgebaut oder hergestellt werden können. Das LMD-Verfahren erlaubt Aufbau oder Abscheidungsraten von 30 bis 40 cm³/h. Ein Nachteil des LMD-Verfahrens betrifft die Schwierigkeit, Innenstrukturen oder innenliegende Strukturen oder Geometrien mit Strukturgrößen oder Strukturabmessungen von weniger als 150 µm herzustellen, wodurch der additiven Fertigung diesbezüglich Grenzen gesetzt sind.

Insbesondere bei der Herstellung von Komponenten für Strömungsmaschinen, beispielsweise Gasturbinen, können Innenstrukturen mit Strukturgrößen von teilweise deutlich unterhalb von 100 µm oder 150 µm für eine Vielzahl von möglichen Komponenten für verschiedene Anwendungen erwünscht oder erforderlich sein. Solche Strukturen sind heute lediglich mittels zeit- und kostenaufwendiger Gießtechnologie herstellbar.

Auftragschweiß-Verfahren sind beispielsweise bekannt aus EP 2 756 909 A1.

Es ist daher eine Aufgabe der vorliegenden Erfindung, ein verbessertes Verfahren zur Herstellung eines Werkstücks oder eines Bauteils anzugeben, insbesondere ein Verfahren, mit welchem Bauteile kosten- und/oder zeiteffizienter und/oder mit verbesserten Eigenschaften hergestellt werden können.

Diese Aufgabe wird durch die Merkmale der unabhängigen Patentansprüche gelöst. Vorteilhafte Ausgestaltungen sind Gegenstand der abhängigen Patentansprüche.

Ein Aspekt der vorliegenden Erfindung betrifft ein Verfahren zur Herstellung eines Werkstücks, umfassend das Bereitstellen eines Substrats mit einer vorbestimmten Oberflächenstruktur.

Das Werkstück ist vorzugsweise ein hochtemperaturbeständiges Bauteil für den Einsatz im Heißgaspfad einer Strömungsmaschine, beispielsweise einer Gasturbine zur Energieerzeugung.

Die vorbestimmte Oberflächenstruktur ist vorzugsweise eine mikroskopische Oberflächenstruktur. Mit anderen Worten weist die vorbestimmte Oberflächenstruktur vorzugsweise mindestens ein mikroskopisches Oberflächenstrukturelement auf. Die Oberflächenstruktur ist weiterhin vorbestimmt, d.h. beispielsweise bezüglich seiner Topographie oder Struktur für eine spezifische Anwendung festgelegt.

Das Verfahren umfasst weiterhin das Beschichten der Oberflächenstruktur mit einem Beschichtungsmaterial, vorzugsweise einem Metall, wobei das Beschichtungsmaterial für eine Herstellungstemperatur eines additiven Herstellungsverfahrens beständig ist.

Die Herstellungstemperatur ist vorzugsweise eine Temperatur, welche von einer Verfestigungseinrichtung des entsprechenden additiven Herstellungsverfahrens, insbesondere einem Laser- oder Elektronenstrahl, erreicht wird oder, auf welche ein Material innerhalb kürzester Zeit erwärmt wird, sobald sie von dem genannten Strahl getroffen oder beaufschlagt wird.

Durch das Beschichtungsmaterial bzw. durch den entsprechenden Beschichtungsschritt im Rahmen des Herstellungsverfahrens kann insbesondere das Substrat durch die schützende Beschichtung des Beschichtungsmaterials vor der Einwirkung von hohen Temperaturen während der additiven Herstellung, wie oben beschrieben, insbesondere vor einem Wärmeeintrag oder dadurch bedingten Schaden, geschützt werden.

In einer Ausgestaltung ist das Verfahren zur Beschichtung der Oberflächenstruktur bezüglich der Herstellungstemperatur an das additive Herstellungsverfahren angepasst (oder umgekehrt), derart, dass das Beschichtungsmaterial für die Herstellungstemperatur beständig ist.

Das Verfahren umfasst weiterhin das additive Herstellen eines Materials für das Werkstück oder das Bauteil auf der beschichteten Oberflächenstruktur mit dem additiven Herstellungsverfahren, so dass die beschichtete Oberflächenstruktur eine Grundfläche des herzustellenden Werkstücks definiert.

Bei der Grundfläche handelt es sich vorzugsweise um die Oberfläche einer Unterseite des Werkstücks, deren Struktur bei der Herstellung vorzugsweise zuerst aufgebaut oder abgeschieden wird. In diesem Sinne ist das Substrat vorzugsweise formgebend für das Werkstück oder das Bauteil, wobei die Struktur des Substrats durch das erfindungsgemäße Verfahren auf die Grundfläche des herzustellenden Werkstücks übertragen werden kann oder darauf abgebildet wird. In diesem Sinne kann die Grundfläche des Werkstücks beispielsweise ein Negativ oder Positiv der vorbestimmten Oberflächenstruktur aufweisen oder bilden. Vorzugsweise bildet die Oberflächenstruktur das entsprechende Negativ oder stellt dieses dar und die Grundfläche bildet das entsprechende Positiv oder stellt dieses dar. Mit anderen Worten stellt die Grundfläche weiterhin einen Abdruck der Oberflächenstruktur des Substrats dar, definiert diesen oder umfasst den genannten Abdruck. In diesem Zusammenhang kann das Werkstück gemäß der vorliegenden Offenbarung ebenfalls eine (abgebildete) Oberflächenstruktur aufweisen.

Das Verfahren umfasst weiterhin - nach dem additiven Herstellen - das Ablösen des Substrates von dem Beschichtungsmaterial bzw. dem Werkstück, beispielsweise mittels einer Säurebehandlung oder weiteren Methoden des Standes der Technik.

In einer Ausgestaltung ist oder wird ein Substratmaterial des Substrats derart gewählt, dass das Substrat nachträglich durch thermische oder chemische Mittel auf besonders einfache Weise von dem Werkstück abgelöst oder getrennt werden kann.

Das beschriebene Verfahren kann weitere Verfahrensschritte umfassen, beispielsweise eine Temperaturbehandlung nach dem additiven Herstellen des Materials, wobei insbesondere eine für das Werkstück günstige oder erforderliche Kristallstruktur oder Materialphase eingestellt wird. Dabei können Kristallfehler im Material ausgeheilt und/oder innere Spannungen im Material reduziert werden.

Als Vorteil des beschriebenen Verfahrens ist es mit Vorteil möglich, gemäß der vorliegenden Erfindung, Innenstrukturen auf der Grundfläche oder entsprechende Abmessungen der Innenstrukturen herzustellen, welche beispielsweise ausschließlich über konventionelle LMD-Technologie, d.h. ohne die erfindungsgemäße Definition der Grundfläche, nicht erreicht werden können. Dies wird insbesondere dadurch erreicht, dass die vorbestimmte Oberflächenstruktur durch das beschriebene Verfahren die Grundfläche für das durch das herzustellende Werkstück über das beschichtete Substrat definiert.

Durch die Beschichtung der Oberflächenstruktur mit dem Beschichtungsmaterial können die erwähnten Vorteile speziell für additive Herstellungsverfahren genutzt werden, nämlich solche, in denen besonders hohe Temperaturen beteiligt sind.

Nach dem Bereitstellen des Substrates mit der vorbestimmten Oberflächenstruktur kann insbesondere in beliebiger Weise jedes gewünschte 3D-Werkstück oder Bauteil, z.B. mittels Auftragschweißen, mit der durch die beschichtete Oberflächenstruktur definierten Grundfläche hergestellt werden. Insbesondere kann dabei auf die zeitaufwendige Herstellung von Gusskernen oder -bauteilen durch konventionelle Gießtechnologie verzichtet werden, wodurch, insbesondere bei der Abformung komplexer, mikroskopischer Innenstrukturen - oftmals ein monatelanger Entwicklungsaufwand verhindert werden kann. Im Gegenzug können die oben genannten Vorteile der Auftragschweiß-Verfahren ausgenutzt werden.

In einer Ausgestaltung wird das additive Herstellen mittels Auftragschweißen, vorzugsweise Laserauftragschweißen, insbesondere Laserpulverauftragschweißen oder Elektronenstrahlschweißen durchgeführt.

In einer Ausgestaltung werden bei dem additiven Herstellen des Materials für das Werkstück, insbesondere durch Laserauftragschweißen, die Belichtungszeit beziehungsweise Expositionszeit, die Laserleistung und/oder weitere Parameter entsprechend der gewünschten Oberflächenstruktur des Werkstücks eingestellt. Dabei kann beispielsweise die Kornorientierung oder Korngröße des aufzubauenden Materials für das Werkstück eingestellt oder beeinflusst werden, wodurch beispielsweise die Kriechfestigkeit des Materials oder die Rissbeständigkeit oder Duktilität optimiert werden können. Alternativ oder zusätzlich kann durch die genannte Ausgestaltung Anbindungsfehlernfehlern, beispielsweise bezüglich einer Kohäsion oder Adhäsion der beteiligten Materialien, vorgebeugt werden.

In einer Ausgestaltung ist die Grundfläche eine bezüglich einer Kontur des herzustellenden Werkstücks zumindest teilweise nach innen gerichtete oder innenliegende bzw. innen angeordnete Oberfläche. Mit anderen Worten liegt die Grundfläche vorzugsweise innerhalb der genannten Kontur. Die Kontur beschreibt in diesem Sinne vorzugsweise eine einhüllende Oberfläche des Werkstücks oder Bauteils.

In einer Ausgestaltung erfolgt das Bereitstellen des Substrates derart, dass die Oberflächenstruktur zur Definition der Grundfläche mindestens ein Oberflächenstrukturelement, vorzugsweise eine Vielzahl von Oberflächenstrukturelementen, mit einer Abmessung von (jeweils) weniger als 100 µm aufweist.

Ein erfinderischer Vorteil des beschriebenen Verfahrens betrifft eine verbesserte "Auflösung" von Strukturen oder Merkmalen auf der Grundfläche, beziehungsweise eine erhöhte Fertigungsgenauigkeit. Weiterhin kann auf aufwendige Stützstrukturen verzichtet werden.

Es ist insbesondere möglich, Mikrostrukturen, wie beispielsweise Rippenstrukturen und/oder Turbulatoren für eine Anwendung des Werkstücks in Turbinenschaufeln, mit einzelnen Strukturgrößen von wenigen Millimetern oder sogar bis hin zu Größen von weniger als 100 µm beispielsweise auf der Innenseite von schwer zugänglichen Komponenten oder Werkstücken herzustellen, die weder mit Pulverbettverfahren, beispielsweise SLM-Technologie, noch mit Frästechnologie - mangels Zugänglichkeit des Fräswerkzeug auf der genannten Innenseite durch die Größe der Fräsköpfe - erreicht werden können.

In einer Ausgestaltung ist das Material für das Werkstück eine nickel- oder kobaltbasierte Superlegierung oder ein Ausgangsstoff dafür.

In einer Ausgestaltung umfasst das Material für das Werkstück eine nickel- oder kobaltbasierte Superlegierung oder einen Ausgangsstoff dafür.

Diese Ausgestaltungen sind insbesondere für den Einsatz des Werkstücks oder Bauteils im Bereich von Strömungsmaschinen zweckmäßig.

In einer Ausgestaltung ist das Werkstück ein hochtemperaturbeständiges Bauteil, beispielsweise ein Bauteil, welches in oder im Zusammenhang mit dem Heißgaspfad einer Strömungsmaschine, wie einer Gasturbine, eingesetzt wird. Hochtemperaturbeständig kann insbesondere bedeuten, dass das Werkstück oder Bauteil bzw. sein Material hochwarmfest ist, einen Schmelzpunkt von über 1000 °C, vorzugsweise 1200 °C, aufweist und/oder beispielsweise Einsatztemperaturen von 80 %, 90 % oder mehr des Schmelzpunktes des entsprechenden Materials erreicht.

In einer Ausgestaltung wird die Oberflächenstruktur - vorzugsweise lediglich oberflächlich - und vor dem Beschichten mit dem Beschichtungsmaterial, aufgeraut oder vorbehandelt, um eine Haftung des Beschichtungsmaterials auf der Oberflächenstruktur zu verbessern. Die genannte Aufrauung oder Vorbehandlung ist insbesondere für die Vermittlung einer Haftung zwischen dem Beschichtungsmaterial und der Oberflächenstruktur vorteilhaft. Weiterhin kann diese Behandlung durch dem Fachmann bekannte physikalische oder chemische Mittel, beispielsweise Ätzen oder eine Ozonbehandlung, erfolgen.

In einer Ausgestaltung ist das Beschichtungsmaterial ein Metall und/oder ein Keramik-Metall-Verbundstoff, beispielsweise ein "CERMET"-Material.

In einer Ausgestaltung sind das Beschichtungsmaterial und das Material für das Werkstück zumindest in Bestandteilen identisch. Das Beschichtungsmaterial und das Material für das Werkstück können vollständig identisch sein. Dies hat insbesondere den Vorteil, dass keine unerwünschten chemischen oder physikalischen Reaktionen zwischen dem Beschichtungsmaterial und dem Material für das Werkstück auftreten.

In einer Ausgestaltung sind das Beschichtungsmaterial und das Material für das Werkstück hinsichtlich der jeweiligen chemischen und/oder physikalischen Eigenschaften möglichst ähnlich.

In einer Ausgestaltung erfolgt das Beschichten der Oberflächenstruktur durch ein thermisches Beschichtungsverfahren, beispielsweise thermisches Spritzen. Der Vorteil dieser Verfahren liegt darin, dass üblicherweise eine gute Homogenität der abzuscheidenden Schicht als auch eine vorteilhaft kleine Porosität und/oder eine gute Anbindung an der Oberflächenstruktur erreicht werden können.

In einer Ausgestaltung erfolgt das Beschichten mittels eines anisotropen Beschichtungsverfahrens, insbesondere einem Verfahren zur chemischen Gasphasenabscheidung. Durch diese Ausgestaltung können mit Vorteil auch schwer zugängliche, beispielsweise innenliegende Oberflächen, mit dem Beschichtungsmaterial beschichtet, und damit die erfindungsgemäßen Vorteile genutzt werden.

In einer Ausgestaltung wird nach dem Bereitstellen des Substrats, und vorzugsweise vor dem Beschichten der Oberflächenstruktur mit dem Beschichtungsmaterial, eine (separate) Haftvermittlungsschicht auf der Oberflächenstruktur aufgebracht. Vorzugsweise ist dieser Haftvermittler möglichst dünn, um die Auflösung der auf das Werkstück zu übertragenden Oberflächenstrukturen nicht zu verschlechtern.

In einer Ausgestaltung weist die beschichtete Oberflächenstruktur eine Rauheit von weniger als 60 µm auf, vorzugsweise weniger als 40 µm, besonders bevorzugt weniger als 30 oder 20 µm auf. Durch diese Ausgestaltung kann insbesondere eine feine oder hohe "Auflösung" der beschichteten Oberflächenstruktur erreicht und damit entsprechend filigrane Oberflächenstrukturen für das Werkstück abgebildet werden.

In einer Ausgestaltung wird das Beschichten der Oberflächenstruktur derart gleichmäßig oder homogen durchgeführt, dass eine Schichtdicke des Beschichtungsmaterials, vorzugsweise über die gesamte Fläche der Oberflächenstruktur hinweg um weniger als 100 µm, vorzugsweise weniger als 50 µm, beispielsweise von einem Mittelwert, abweicht.

In einer Ausgestaltung umfasst das Substrat eine Keramik oder ein Gussbauteil, welches die Oberflächenstruktur bildet.

Ein weiterer Aspekt der vorliegenden Erfindung betrifft ein Werkstück oder Bauteil, welches nach dem hier beschriebenen Verfahren hergestellt wurde oder herstellbar ist, beispielsweise ein Werkstück, umfassend die Grundfläche, wobei das Herstellungsverfahren für das Werkstück das additive Herstellen des Materials für das Werkstück auf der vorbestimmten Oberflächenstruktur des Substrats umfasst und wobei die Oberflächenstruktur - wie beschrieben - die Grundfläche definiert. Mit anderen Worten umfasst die (beschichtete) Grundfläche einen Abdruck der Oberflächenstruktur oder einen Teil der Oberflächenstruktur.

Das beschriebene Werkstück weist gemäß dem beschriebenen Herstellungsverfahren vorzugsweise spezifische und oder charakteristische Eigenschaften auf. Beispielsweise kann das Material oder Werkstück hinsichtlich seiner Struktur- oder Oberflächeneigenschaften durch einschlägige Verfahren der Oberflächen oder Strukturanalyse von Werkstücken, welche mittels anderer Verfahren hergestellt wurden oder herstellbar sind, unterschieden werden. Solche Verfahren sind beispielsweise Transmissionselektronenmikroskopie (TEM), energiedispersive Röntgenanalyse und/oder Röntgenfluoreszenzanalyse. Durch diese Verfahren kann insbesondere die Kristallstruktur des entsprechenden Materials untersucht, und eine Elementanalyse durchgeführt werden.

Merkmale, die sich vorliegend auf das Verfahren beziehen, können sich ebenfalls auf das Werkstück beziehen, und umgekehrt.

Weitere Einzelheiten der Erfindung werden nachfolgend anhand der Zeichnung beschrieben. Gleiche oder sich entsprechende Zeichnungselemente sind in den einzelnen Figuren jeweils mit den gleichen Bezugszeichen versehen.
- Figur 1: bedeutet schematisch den Ablauf eines Verfahrens zur Herstellung eines Werkstücks an.
- Figur 2: zeigt schematisch ein Werkstück, das mittels des in Figur 1 angedeuteten Verfahrens hergestellt wurde.
- Figur 3: zeigt schematisch das Werkstück aus Figur 2, wobei ein Substrat abgelöst wurde.

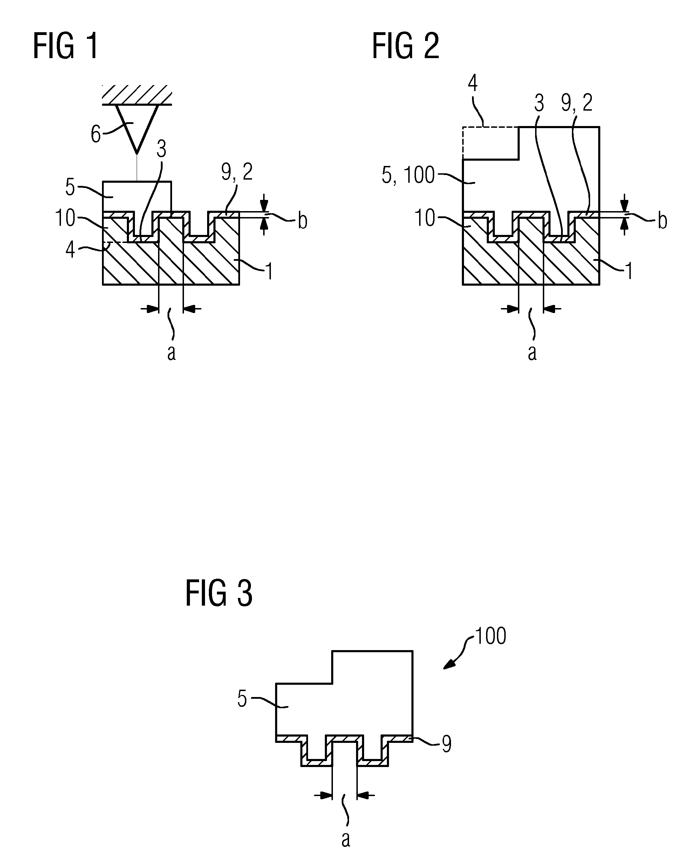

Figur 1 zeigt schematisch den Ablauf eines Verfahrens zur additiven Herstellung eines Werkstücks oder Bauteils (vergleiche Bezugszeichen 100 in Figur 2), beispielsweise eines Bauteils für eine Strömungsmaschine, wie eine Gasturbine. Bei dem Werkstück 100 handelt sich vorzugsweise um ein im Zusammenhang mit einem Heißluftpfad einer Gasturbine angewendeten, hochtemperaturbeständigen Werkstück. Das Werkstück besteht vorzugsweise aus einer nickel- oder kobaltbasierten Superlegierung oder umfasst ein entsprechendes Material.

Das Verfahren umfasst das Bereitstellen eines Substrats 1, welches in Figur 1 bzw. Figur 2 in einer Seiten- oder Schnittansicht angedeutet ist. Das Substrat 1 umfasst eine vorbestimmte Oberflächenstruktur 2. Die vorbestimmte Oberflächenstruktur 2 kann beispielsweise eine Rippenstruktur und/oder eine Turbulatorstruktur sein oder durch diese definiert sein.

Bei der vorbestimmten Oberflächenstruktur 2 handelt es sich vorzugsweise um eine Oberflächenstruktur mit Oberflächenstrukturelementen 10, wie in den Figuren 1 und 2 gezeigt. Die Oberflächenstrukturelementen 10 haben (beispielhaft gezeigt) jeweils einen rechteckigen Querschnitt.

Die Oberflächenstrukturelemente 10, vorzugsweise jedes einzelne oder mindestens eines von den Oberflächenstrukturelementen 10, können eine äußere Abmessung oder Dimension von einigen oder wenigen Millimetern, beispielsweise bis zu 3 Millimetern, haben. Alternativ können die Oberflächenstrukturelemente 10 eine Abmessung oder Dimension im Mikrometerbereich, vorzugsweise kleiner als 100 µm, besonders bevorzugt kleiner als 80 µm oder noch kleiner (vergleiche Abmessung a weiter unten).

Die Oberflächenstruktur 2 ist vorzugsweise für die Herstellung des Werkstücks vorbestimmt oder festgelegt. Mit anderen Worten ist die Topografie der Oberflächenstruktur festgelegt.

Obwohl dies nicht explizit in den Figuren dargestellt ist, können die Oberflächenstrukturelemente oder auch nur einige von ihnen unterschiedlich sein und/oder untereinander unterschiedliche Abmessungen haben.

Das Verfahren umfasst weiterhin das Beschichten der Oberflächenstruktur 2 mit einem Belichtungsmaterial 9. Das Beschichtungsmaterial 9 ist in Figur 1 bereits durch das erfindungsgemäße Verfahren zur Herstellung des Werkstücks vollständig auf der Oberflächenstruktur 2 abgeschieden gezeigt. Das Beschichtungsmaterial 9 ist weiterhin mit einer Schichtdicke b auf der Oberflächenstruktur aufgebracht worden und zwar derart, dass die beschichtete Oberflächenstruktur 2 eine Grundfläche 3 des (herzustellenden) Werkstücks 100 definiert. Dies ist in Figur 1 dadurch angedeutet, dass die Oberflächenstruktur 2 ein Negativ und die Grundfläche 3 bzw. deren Oberflächenstruktur (nicht explizit gekennzeichnet) ein entsprechendes Positiv bildet. Mit anderen Worten ist die (mit dem Beschichtungsmaterial beschichtete) Oberflächenstruktur 2 des Substrates 1 formgebend für die Grundfläche des Werkstücks 100. Das fertige Werkstück (vergleiche Figuren 2 und 3) weisen demgemäß die Grundfläche 3 auf.

Das Beschichtungsmaterial 9 ist weiterhin vorzugsweise derart gewählt und/oder ausgebildet, dass es für eine Herstellungstemperatur des additiven Herstellungsverfahrens, mit welchem das Werkstück hergestellt wird (vgl. weiter unten), zumindest kurzzeitig, beständig ist. Insbesondere ist das Beschichtungsmaterial 9 beständig und/oder warmfest für Temperaturen oberhalb von 1000 °C, bevorzugt oberhalb von 1200 °C, 1400 °C oder noch höheren Temperaturen sein; zumindest für eine Dauer von einigen Sekunden oder Minuten, in der das Beschichtungsmaterial beispielsweise direkt mit einem Laser- oder Elektronenstrahl exponiert wird.

Die Beschichtung mit dem Beschichtungsmaterial 9 erfolgt im Rahmen des erfindungsgemäßen Verfahrens vorzugsweise derart, dass das Beschichtungsmaterial 9 mit einer Schichtdicke von b auf der Oberflächenstruktur 2 des Substrats 1 beschichtet oder abgeschieden wurde, besonders bevorzugt mittels eines thermischen Beschichtungsverfahrens. Bevorzugt können weitere Verfahren, insbesondere Verfahren der physikalischen Gasphasenabscheidung, zum Beispiel Elektronen- oder Laserstrahlverdampfen, für die Beschichtung genutzt werden. Weitere möglich Verfahren sind das thermisches Spritzen, zum Beispiel Hochgeschwindigkeits-Flammenspritzen, oder aber Kaltgasspritzen, ein Tauschbeschichtungsverfahren oder ein galvanisches Beschichtungsverfahren.

Bevorzugt ist das Beschichtungsmaterial 9 ein Metall oder ein Keramik-Metall-Verbundstoff, beispielsweise eine Keramikverbindung in einer Metallmatrix, wie ein "CERMET"-Material. Dementsprechend kommen für die Beschichtung besonders bevorzugt thermische Beschichtungsverfahren, wie das thermische Spritzen, zum Einsatz. Alternativ können jedoch - vorzugsweise im Falle von niederschmelzenden Substratmaterialien, d.h. Strukturen, welche die Oberflächenstruktur aufweisen, wie Polymere oder niederschmelzende Metalle "kalte" Beschichtungsverfahren für die Beschichtung der Oberflächenstruktur verwendet werden.

Obwohl dies in den Figuren nicht explizit dargestellt ist, kann vor dem Beschichten der Oberflächenstruktur 2 mit dem Beschichtungsmaterial 9 ein Haftvermittler zum Verbessern der Haftung des Beschichtungsmaterials 9 angewendet werden.

Besonders bevorzugt wird das Beschichtungsmaterial 9 weiterhin derart aufgebracht, dass es möglichst, vorzugsweise vollständig gleichmäßig und/oder homogen, auf der Oberflächenstruktur 2 angeordnet ist. Besonders bevorzugt beträgt die Schichtdicke des Beschichtungsmaterials 9 ebenfalls an vertikalen oder schrägen Abschnitten der Oberflächenstruktur ebenfalls b.

Bevorzugt ist das Beschichtungsmaterial 9 aus einem chemisch und/oder physikalisch verwandten Material wie das Material, aus dem das Werkstück 100 hergestellt wird.

Besonders bevorzugt ist das Beschichtungsmaterial 9 weiterhin aus demselben Material wie das Werkstück 100, beispielsweise einer nickel- oder kobaltbasierten Superlegierung.

Das Verfahren umfasst weiterhin das additive Herstellen eines Materials 5 für das Werkstück auf der Oberflächenstruktur 2,

Das Beschichtungsmaterial 9 und das Material 5 für das Werkstück 100 sind vorzugsweise zumindest in Teilen, beispielsweise Hauptbestandteilen und/oder Legierungsbestandteilen, identisch. Das Beschichtungsmaterial 9 kann weiterhin komplett identisch zu dem Material 5 sein.

In Figur 1 ist das Werkstück (vergleiche Bezugszeichen 100 in Figur) noch nicht fertig hergestellt. Im Folgenden kann daher das Material 5 synonym mit dem Werkstück 100 bezeichnet sein. Das Material kann insbesondere ein Ausgangsmaterial für das Werkstück sein.

Weiterhin kann das Verfahren zur Herstellung des Werkstücks eine oder mehrere Wärmebehandlungen, beispielsweise zur Einstellung von bestimmten Phasenausscheidungen umfassen. Dabei kann es sich insbesondere um zweckmäßige Phasen-Ausscheidungen oder Einstellungen der γ oder γ' -Phasen des jeweiligen herzustellenden Materials der Superlegierung handeln.

Das additive Herstellen des Werkstücks erfolgt vorzugsweise mittels Auftragschweißen, beispielsweise Laserauftragschweißen (LMD), insbesondere Laserpulverauftragschweißen oder Elektronenstrahlschweißen. Die genannten Verfahren oder Techniken zum Auftragschweißen laufen vorzugsweise durch CAD- und/oder robotergestützt ab oder können entsprechend gesteuert werden. Eine entsprechende Laserauftragschweiß-Vorrichtung ist in Figur 1 mit dem Bezugszeichen 6 angedeutet.

Das Material 5 zur Herstellung des Werkstücks 100 wird gemäß dem beschriebenen Verfahren vorzugsweise durch Laserpulverauftragschweißen gefertigt oder hergestellt. Dabei wird im Rahmen des beschriebenen Verfahrens zur Herstellung des Werkstücks, dieses vorzugsweise entsprechend den für die gewünschte (3D-)Struktur zweckmäßigen Materialeigenschaften gefertigt. Dabei können Prozessparameter, wie die Laserleistung, die Belichtungs- oder Expositionszeit des Lasers oder weitere Parameter entsprechend der gewünschten Materialphase eingestellt werden. Weiterhin kann beispielsweise an schwer zugänglichen Stellen oder Kanten des herzustellenden Werkstücks eine längere Belichtungszeit erforderlich sein, als an anderen Stellen. Auch kann bei einer "Abrasterung" während des Materialaufbaus ein Apparaturkopf der Auftragschweiß-Vorrichtung über oder mithilfe einer Rückkoppelungsschleife geführt werden.

Figur 2 zeigt unter anderem das fertig hergestellte Werkstück oder Bauteil 100, welches mittels des beschriebenen Verfahrens hergestellt oder herstellbar ist. Das Werkstück 100 ist über das Beschichtungsmaterial 9 und optional über einen Haftvermittlungsmaterial einstückig mit dem Substrat 1 verbunden. Dementsprechend stellt die Grundfläche 3 des Beschichtungsmaterials 9 einen Abdruck der beschichteten Oberflächenstruktur 2 dar oder umfasst diesen. Vorteilhafterweise wird durch das beschriebene Verfahren - durch die Vorgabe der Oberflächenstruktur auf dem Substrat - die Grundfläche des Beschichtungsmaterials 9, aber vorzugsweise auch des herzustellenden Werkstücks 100 definiert, abgebildet oder abgeformt, um die Oberflächenstruktur auf das Werkstück zu übertragen und somit eine besonders hochauflösende und oder mikroskopisch strukturierte Grundfläche des Werkstücks zu erzeugen.

Das Werkstück 100 in Figur 2 weist eine Kontur 4 auf, welche das Werkstück 100 einschließlich dessen Oberflächenstrukturelemente umschließt oder einhüllt. Die Kontur 4 ist durch die gestrichelte Linie in Figur 2 und im Zusammenhang mit dem Material 5 auch in Figur 1 dargestellt. Die Grundfläche 3 ist bezüglich der Kontur 4 des herzustellenden Werkstücks 100 eine zumindest teilweise innen liegende Oberfläche des Werkstücks 100.

Die in Figur 1 und 2 gezeigten Oberflächenstrukturelemente 10 oder zumindest eines von ihnen haben beispielsweise eine Abmessung a von weniger als 100 µm. Die Abmessung bezieht sich vorzugsweise auf eine Breite (vergleiche horizontale Richtung in den Figuren 1 und 2) der jeweiligen Oberflächenstrukturelemente 10, kann sich jedoch auch auf eine entsprechende Tiefe oder Höhe beziehen. Die Breite kann demgemäß eine Richtung entlang der Kontur bezeichnen.

Je kleiner also die Breite oder Abmessung a der Oberflächenstrukturelemente 10 des Substrats 1, desto kleiner, feiner oder filigraner kann auch die Grundfläche 3 des Werkstücks strukturiert werden.

Gemäß einer Ausführungsform der vorliegenden Erfindung ist das Substrat 1 eine Keramik oder ein Gussbauteil oder umfasst beispielsweise eine Keramik zumindest an der Oberflächenstruktur 2. Das Substrat 1 kann beispielsweise durch Feinguss unter Zuhilfenahme von keramischen Gusskernen her- oder bereitgestellt werden. Vorzugsweise ist oder wird die Oberflächenstruktur 2 durch einen keramischen Gusskern gebildet. Der Gusskern besteht beispielsweise aus Aluminiumoxid, beispielsweise Al₂O₃, oder Siliziumdioxid (SiO₂) oder umfasst eines dieser Materialien. Mit anderen Worten kann das Bereitstellen gemäß dem beschriebenen Verfahren durchgeführt werden.

Weiterhin weist der Gusskern vorzugsweise auf der Außenseite eine sehr feine Pulverkörnung auf, um zweckmäßigerweise eine feine, beispielsweise mikroskopisch kleine Oberflächenstrukturen "auflösen" zu können. Mit zunehmendem Abstand von der Oberflächenstruktur kann das Material des Substrats (des Gusskerns) eine immer poröser oder gröber werdende Körnung oder Gradierung umfassen, um gleichzeitig noch eine ausreichende (thermische) Schockbeständigkeit zu haben. Ein derartig gradiertes Bauteil weist vorzugsweise eine besonders kleine und technologisch erwünschte Oberflächenrauheit von lediglich 50 µm oder weniger, beispielsweise 30 µm, auf.

Bei dem Begriff "Rauheit" kann es sich um eine mittlere Rauheit, eine quadratische Rauheit oder einen Mittenrauwert handeln.

Gemäß einer Ausgestaltung umfasst das Substrat zumindest an der Oberflächenstruktur oder als Oberflächenstruktur 2 ein Refraktärmetall, beispielsweise Tantal, Zirkonium, Molybdän oder Wolfram oder ein anderes hochschmelzendes, beispielsweise unedles, Metall der vierten, fünften oder der sechsten Nebengruppe des Periodensystems. Gemäß dieser Ausgestaltung wird oder ist die Oberflächenstruktur vorzugsweise durch Elektronenstrahlschmelzen hergestellt.

Obwohl dies in den Figuren nicht explizit dargestellt ist, umfasst das Verfahren weiterhin das Ablösen des Substrats 1 von dem Werkstück 100 nach dem additiven Herstellen desselben (vgl. Figur 3). Das Ablösen des Substrats 1 kann für alle beschriebenen Ausführungsformen selektiv auf thermischem oder chemischem Wege erfolgen. Beispielsweise kann, unabhängig davon, ob das Substrat oder die Oberflächenstruktur metallisch oder keramisch ist, das Werkstück 100 chemisch abgelöst werden.

Beispielsweise kann im Fall eines Substrats mit einer Aluminiumoberflächenstruktur, das Ablösen mittels konzentrierter Salzsäure und bei Temperaturen zwischen 50°C und 80 °C erfolgen.

Figur 3 deutet schematisch an, dass das Substrat 1 nach dem additiven oder additiven Herstellen des Werkstücks 100 beispielsweise durch eine chemische oder thermische Ablösung entfernt wurde.

Alternativ zu der Darstellung der Figur 3 kann das Substrat ebenfalls dadurch von dem Werkstück 100 abgelöst werden, dass das Beschichtungsmaterial 9 von dem Substrat 1 durch geeignete Mittel (selektive thermische und/oder chemische Ablösung) getrennt wird.

Die Erfindung ist nicht durch die Beschreibung anhand der Ausführungsbeispiele auf diese beschränkt, sondern umfasst insbesondere jede Kombination von Merkmalen in den Patentansprüchen, auch wenn dieses Merkmal oder diese Kombination selbst nicht explizit in den Patentansprüchen oder Ausführungsbeispielen angegeben ist.

## Patentansprüche

1. Verfahren zur Herstellung eines Werkstücks (100) umfassend die folgenden Schritte:
- Bereitstellen eines Substrats (1) mit einer vorbestimmten Oberflächenstruktur (2),
- Beschichten der Oberflächenstruktur (2) mit einem Beschichtungsmaterial (9), wobei das Beschichtungsmaterial (9) für eine Herstellungstemperatur eines additiven Herstellungsverfahrens beständig ist,
- additives Herstellen eines Materials (5) für das Werkstück (100) auf der beschichteten Oberflächenstruktur (2, 9) mit dem additiven Herstellungsverfahren, so dass die beschichtete Oberflächenstruktur (2, 9) eine Grundfläche (3) des herzustellenden Werkstücks (100) definiert, und
- Ablösen des Substrats (1).

2. Verfahren nach Anspruch 1, wobei das additive Herstellen mittels Auftragschweißen durchgeführt wird.

3. Verfahren nach Anspruch 1 oder 2, wobei die Grundfläche (3) eine bezüglich einer Kontur (4) des herzustellenden Werkstücks (100) zumindest teilweise innen liegende Oberfläche des Werkstückes (100) ist.

4. Verfahren nach einem der vorhergehenden Ansprüche, wobei das Material (5) eine nickel- oder kobaltbasierte Superlegierung oder ein Ausgangsstoff dafür ist.

5. Verfahren nach einem der vorhergehenden Ansprüche, wobei die Oberflächenstruktur (2) vor dem Beschichten mit dem Beschichtungsmaterial (9), aufgeraut oder vorbehandelt wird, um eine Haftung des Beschichtungsmaterials (9) auf der Oberflächenstruktur (2) zu verbessern.

6. Verfahren nach mindestens einem der vorhergehenden Ansprüche, wobei das Beschichtungsmaterial (9) ein Metall und/oder ein Keramik-Metall-Verbundstoff ist.

7. Verfahren nach mindestens einem der vorhergehenden Ansprüche, wobei das Werkstück (100) ein hochtemperaturbeständiges Bauteil ist.

8. Verfahren nach einem der vorhergehenden Ansprüche, wobei das Beschichtungsmaterial (9) und das Material (5) für das Werkstück (100) zumindest in Bestandteilen identisch sind.

9. Verfahren nach einem der vorhergehenden Ansprüche, wobei das Beschichten der Oberflächenstruktur (2) durch ein thermisches Beschichtungsverfahren, beispielsweise thermisches Spritzen, erfolgt.

10. Verfahren nach einem der vorhergehenden Ansprüche, wobei die beschichtete Oberflächenstruktur (2, 9) eine Rauheit von weniger als 60 µm aufweist.

11. Verfahren nach mindestens einem der vorhergehenden Ansprüche, wobei das Substrat (1) eine Keramik umfasst, welche die Oberflächenstruktur (2) bildet.

12. Werkstück (100), welches mittels des Verfahrens gemäß einem der vorhergehenden Ansprüche hergestellt oder herstellbar ist.
